# EUROPEAN PATENT APPLICATION

(11) **EP 4 261 931 A1**
(43) Date of publication of application: **18.10.2023**
(21) Application number: 22168415.2
(22) Date of filing: 14.04.2022
(51) Int. Cl.: H01M 4/133, H01M 4/36, H01M 4/48

(54) **SURFACE-COATED SILICON-CARBON COMPOSITE MATERIAL, METHOD FOR MANUFACTURING A SURFACE-COATED SILICON-CARBON COMPOSITE MATERIAL, ANODE ELECTRODE AND ELECTROCHEMICAL STORAGE DEVICE**

(71) Applicant: Cellforce Group GmbH, 72072 Tübingen (DE); Group14 Technologies, Woodinville, WA 98072 (US)
(72) Inventor: Sommer, Heino, 76344 Eggenstein-Leopoldshafen (DE); Costantino, Henry R., Woodinville, 98072 (US)
(74) Representative: Michalski Hüttermann & Partner Patentanwälte mbB

(57) **Abstract**

The invention relates to a silicon-carbon composite material comprising a porous carbon scaffold comprising micropores and mesopores and a total pore volume of more than 0.5 cm3/g; a silicon content between 30% and 70%, including 30% and 70%; and a surface area with at least partially applied first surface coating comprising at least one of the elements of Li, B, Al, Si, P, Ti, Zr, Nb and/or W. Furthermore, the invention relates to a method for manufacturing such a surface-coated silicon-carbon composite material, to an anode electrode and to an electrochemical storage device.

## Description

The present disclosure relates to a surface-coated silicon-carbon composite material comprising a porous carbon scaffold comprising micropores and mesopores with a pore volume. Furthermore, the disclosure relates to a method for manufacturing a surface-coated silicon-carbon composite material, to an anode electrode and to an electrochemical storage device.

Lithium-ion batteries are widely used and provide stored energy to different components. Especially in electric vehicles and in hybrid electric vehicles such lithium-ion batteries are supplying the vehicle components and the drivetrain with electrical energy. In such use cases a long electric driving range is highly desirable and can be achieved by increasing the capacity of the battery. The capacity of the battery may be increased by increasing the surface area of the electrodes. This is achieved by a more complex surface structure. Different methods are known for coating at least one of the current collectors of the anodes with silicon-carbon in order to increase the area for reversible lithium intercalation and the amount of lithium ions taking part during the charging and discharging procedure. Such complex surface structures and coatings may be prone to chemical reactions with compounds of the environment e.g. during the manufacturing of the lithium-ion cells. Especially during electrolyte filling of the lithium-ion cells parts of the anodes and their surface structures accidently can be exposed to harmful, e.g. oxidizing, substances.

An objective of the present disclosure is to provide a silicon-carbon composite material and a method for manufacturing a silicon-carbon composite material with comprises an improved chemical stability. This object is achieved by the subject-matter of the independent claims. Further developments of the subject-matter of the independent claims are provided in the sub-claims.

According to one aspect of the present disclosure a silicon-carbon composite material is disclosed. Such silicon-carbon composite material may be utilized in an anode electrode and accordingly in an electrochemical storage device like a lithium-ion cell or battery.

The silicon-carbon composite material comprises a porous carbon scaffold with micropores and mesopores and a total pore volume of more than 0.5 cm³/g.

Moreover, the porous carbon scaffold silicon-carbon composite material may comprise a plurality of particles for additional adjustment of its chemical and mechanical properties. Providing additional particles inside the porous carbon scaffold of the silicon-carbon composite material enables control of the kinetics of the lithium ions inside the silicon-carbon composite material.

The silicon-carbon composite material comprises a silicon content between 30% and 70%, including 30% and 70%, and a surface area with at least partially applied first surface coating. The surface coating of the surface area of the silicon-carbon composite material comprises at least one of the elements of Li, B, Al, Si, P, Ti, Zr, Nb and/or W. The percentages mentioned in this application may relate to weight percent or volume percent, relating to silicon-carbon composite material.

In a further aspect of the invention, an anode electrode, comprising a surface-coated silicon-carbon material is provided. The anode electrode can preferably comprise a metal component e.g. a metal foil. On one or on both sides of the metal component, which acts as a current collector, the silicon-carbon composite material can be provided for improved electrical characteristics of the anode electrode.

The silicon-carbon composite material according to a further aspect of the invention can for example comprise the at least one surface coating on the surface areas which are not in contact with the metal component.

By providing at least one surface coating e.g. the first surface coating, the chemical and mechanical stability of the coated silicon-carbon composite material and thus of the anode electrode with such a material is improved. Especially, the surface coating can be applied via a chemical vapour deposition, like an atomic layer deposition process. Such surface coating can also be applied onto silicon-carbon composite materials with complex or uneven surface geometries.

The lithium ions for the reversible lithium intercalation may bypass the first surface coating without remarkable decrease in corresponding kinetics when the at least partially applied first surface coating is formed as a layer with a thickness of 0.1 nm to 1 µm.

In accordance with a further embodiment the first surface coating comprises a metal oxide from at least one or more of the elements B, Al, Si, Zr, Nb, W and/or Li. For example suitable metal oxides may be formed as Al₂O₃ and/or LiAlO₂.

In another embodiment suitable metal oxides may be formed as ZrO₂ or/and Li₂ZrO₃ or mixtures of Al₂O₃, ZrO₂ and mixed lithium aluminum oxides and lithium zirconium oxides.

Appropriate surface coatings can be applied via atomic layer deposition (ALD) process of trimethylaluminum and water or oxygen (subsequent two or more ALD cycles) at temperature between 100 °C and 450 °C, optionally followed by a chemical reaction of the resulting aluminum oxide and aluminum hydroxides with a lithium compound like Li-N(SiMe₃)₂ to form a lithiated metal oxide Such coatings can also be applied in combination with heat exposure and/or in combination with a catalyst. In another embodiment the surface coating layer can be applied by of mixing a metal oxide compound (Al₂O₃, Zr(OH)₄, ZrO(OH)₂ with lithium compounds, followed by a heat treatment step an temperature higher than 200 °C.

In a further embodiment the first surface coating is covering at least 50% of the surface area of the silicon-carbon composite material. Thus, most of the surface area of the silicon-carbon composite material can be protected by the first surface coating.

The silicon-carbon composite material can comprise an additional protection when the surface area of the silicon-carbon composite material is at least partially covered by the first surface coating and at least partially covered by a second surface coating. Preferably, the second surface coating is at least partially applied on top of the first surface coating and/or besides the first surface coating. The second surface coating enables additional control of the chemical and mechanical stability of the silicon-carbon composite material.

Based on an embodiment of the silicon-carbon composite material, the second surface coating is formed as a carbon coating. Such second surface coating may result in a reduced electrical resistance of the silicon-carbon composite material in a transition area between the second surface coating and a current collector or a metal when utilizing the silicon-carbon composite material in an electrode. Moreover such second surface coating may increase the electrical conductivity within the layers of the silicon-carbon composite material. In another embodiment, an additional step can be applied to further passivate the surface area or the silicon-carbon composite material by flushing dry atmosphere (O₂, N₂ or mixtures thereof) over the silicon-carbon composite material at elevated temperatures between 120 °C and 250 °C.

In a further embodiment of the silicon-carbon composite material the silicon-carbon composite material comprises a surface area in the range of 2m²/g to 30 m²/g, more preferably in the range of 4 m²/g to 10 m²/g. The appropriate boundaries of, 2 m²/g, 30 m²/g, 4 m²/g and 10 m²/g may also form the part of the defined ranges. Thus, the first surface coating layer and/or the second surface coating layer can be efficiently applied onto a silicon-carbon composite material with an increased surface area due to its porous carbon scaffold.

Based on a further embodiment of the silicon-carbon composite material the silicon-carbon composite material comprises lithium. Moreover, the first surface coating layer may also comprise lithium formed as a metal oxide. For example the first surface coating may comprise a mixture of Al₂O₃, AIO(OH) and LiAlO₂ which may act as channels for lithium ions during the reversible lithium intercalation between an electrolyte and the silicon-carbon composite material. Thus, the kinetics of the lithium ions through the first and/or second surface coating can be improved.

According to a further aspect of the invention a method for manufacturing a surface-coated silicon-carbon composite material is provided. In a method step a porous carbon scaffold with micropores and mesopores is provided. A compound comprising at least one of the Si, Fe, Al, Ni, W and/or Ti is introduced into the micropores and mesopores of the porous carbon scaffold by chemical vapor infiltration to form a silicon-carbon composite. At least one surface coating is applied on a surface area of the silicon-carbon composite forming the surface-coated silicon-carbon composite material, wherein the at least one surface coating comprises aluminum oxides or zirconium oxides and covers the surface area of the silicon-carbon composite material at least partially.

By providing a surface coating which comprises aluminum oxides or zirconium oxides the silicon-carbon composite material can be protected against unintentional chemical reaction like uncontrolled oxidation processes. Especially, while manufacturing battery cells or electrochemical storage devices an electrode comprising the surface coated silicon-carbon composite material will provide an improved chemical stability and reduced likelihood to unwanted chemical reactions due to the at least partial surface coating.

In an embodiment, the at least one surface coating of the surface area of the silicon-carbon composite material is applied via a gas phase deposition method. Thus, methods like atomic layer deposition or molecular layer deposition can be carried out in order to provide a surface coating with a controlled and uniform layer thickness.

In a further embodiment, the at least one surface coating is treated with a metal alkoxide or metal amide or alkyl metal compound to form a processed compound surface, wherein the processed compound surface is treated with moisture or oxygen or ozone in order to form the at least one layer of surface coating. Such materials for formation of the processed compound surface are widely used and thus can be provided in a cost efficient manner. For example trimethylaluminum can be utilized in order to form the processed compound surface.

The surface coating of the surface area of the silicon-carbon composite material and/or the silicon-carbon composite material comprise is formed with a lithium content. Thus, the silicon-carbon composite material can be pre-charged with lithium ions for the utilization in an electrochemical storage device. Furthermore, by providing lithium, e.g. as LiAlO₂ or Li₂ZrO₃, LiNbO₃ besides the metal oxide Al₂O₃ compounds channels for faster lithium ion exchange between an electrolyte and the silicon-carbon composite material of an electrode can be introduces.

In accordance with a further embodiment, the surface coating of the surface area of the silicon-carbon composite material comprises a metal oxide from at least one of the elements B, Al, Si, Zr, Nb, W and/or Li. Thus, in case of an atomic layer deposition or molecular layer deposition the metal oxides are utilized as precursors. Alternative or additional precursors may be formed as ZrO₂, TiO₂, Al₂O₃, SiNₓ, TaNₓ etc. Furthermore, molecules like Nb(OEt)₅ or Li-N(SiMe₃)₂ can be introduced in order to precisely control the chemical composition of the at least one surface coating. Thus, the method for manufacturing of the surface coated silicon-carbon composite material comprises a plurality of possible materials for adjustment of the chemical and mechanical properties of the surface coating.

In a further embodiment, during the formation of the surface coating of the surface coating area of the silicon-carbon composite material a temperature in a range of 15 °C to 550 °C is applied to the silicon-carbon composite material and the surface coating. Thus, methods like thermal atomic or molecular layer deposition or plasma-enhanced atomic or molecular layer deposition are suitable for the manufacturing of the surface coated silicon-carbon composite material.

Based on a further embodiment, the treatment of the silicon-carbon composite material with a metal alkoxide or metal amide or alkyl metal compound to form a processed compound surface and the treating of the treatment of the processed compound surface with moisture or oxygen or ozone are repeated at least once. Thus, the formation of an even coating of the surface area of the silicon-carbon composite material without leaving any unwanted traces of the processed compounds e.g. AlCH₃ can be ensured.

The manufacturing method can be accelerated if during the treatment of the processed compound with moisture or oxygen or ozone a temperature in a range from 15 °C to 550 °C is applied.

Based on a further aspect of the invention, a method for manufacturing at least one anode electrode is provided. In a step a silicon-carbon composite mixture with at least one carbon is mixed. In a further step the silicon-carbon composite mixture is combined with at least one aqueous binder solution and/or with at least one non-aqueous binder solution in order to form an electrode paste. Furthermore, the electrode paste is applied at least partially on at least one surface of a conductor foil or current collector. Then, the conductor foil with the applied electrode paste is dried at a temperature of 100 °C to 140 °C forming the at least one anode electrode.

As a binder a styrene-butadiene gum/carboxymethylcellulose (CMC/SBR) blend, a polyacrylic acid (PAA) and/or a lithium polyacrylic (LiPAA) or a sodium polyacrylic (NaPAA) may be utilized. In an alternative embodiment, the binder is formed as a fluoropolymer such as a polytetrafluoroethylene (PTFE), a perfluoroalkoxy polymer resin (PFA), a fluorinated ethylene propylene (FEP), a polyethylene tetrafluoroethylene (ETFE), a polyvinyl fluoride (PVF), a polyethylene chlorotrifluoroethylene (ECTFE), a (polyvinylidene fluoride (PCDF), a (polychlorotrifluoroethylene (PCTFE), a trifluoroethanol, or combinations of at least one of these materials with at least one other material. In a further embodiment, a binder is a polyimide or a copolymer of polyacrylic acid and styrene-butadiene. Further possible binders may be formed as methyl methacrylate or as polyvinylidene difluoride.

The step of the surface coating can be applied after the drying process of the electrode paste or the silicon-carbon composite can be provided in an already surface coated form.

In a further aspect of the invention an electrochemical storage device, especially formed as a lithium-ion-battery, is provided. The electrochemical storage device comprises at least one inventive anode electrode, at least one cathode electrode, a separator disposed between the cathode electrode and the anode electrode, and an electrolyte comprising lithium ions. The cathode electrode preferably comprises a transition metal oxide.

By utilizing an anode electrode with the surface-coated silicon-carbon material the requirements on a dry room environment for manufacturing the electrochemical storage device can be reduced due to the surface protected anode electrode.

Depending on the preferred application, according to a further aspect of the invention, a manufacturing process for the anode electrode can also be performed based on dry or semi-dry silicon-carbon composite mixture.

In a first step a dry silicon-carbon composite mixture combined with a binder powder and comprising graphite particles and/or carbon black particles is provided. The binder powder may be formed as PTFE powder.

Optionally 5% to 10% of ethylene carbonate can be added to the mixture.

Then, the silicon-carbon composite mixture combined with the binder powder is applied via calendering at least partially on at least one surface of a conductor foil or current collector. In a further step, at least one surface coating is applied on a surface area of the silicon-carbon composite material forming the surface-coated silicon-carbon composite material, wherein the at least one surface coating comprises aluminum oxides or zirconium oxides and covers the surface area of the silicon-carbon composite material at least partially.

The conductor foil with the applied dry or semi-dry electrode paste is then dried at a temperature of e.g. 100 °C to 140 °C forming the at least one anode electrode. In a further aspect, a usage of a silicon-carbon composite material in an anode electrode is disclosed, wherein the silicon-carbon composite comprises a porous carbon scaffold comprising micropores and mesopores and a total pore volume no less than 0.5 cm³/g; a silicon content from 30% to 70%; and comprises at least partly applied surface coating layer forming a surface coating area on a surface area of the silicon-carbon composite comprising at least one or more of the elements of Li, B, Al, Si, P, Ti, Zr, Nb and/or W.

In a further embodiment, the surface coating layer on the silicon-carbon composite has a thickness in the range from of 0.1 nm to 0.1 µm.

In a further embodiment, the surface coating layer on the silicon-carbon composite material comprises a metal oxide from at least one or more of the elements LI, B, Al, Si, Zr, Nb and W.

In a further embodiment, the surface coating area of the at least one surface coating is covering 50% or more of the surface area of the silicon-carbon composite material.

In a further embodiment, the silicon-carbon composite material comprises a further or second surface coating on top of the first surface coating layer, whereby the first surface coating layer and the second surface coating are forming the surface coating area at least partially.

In a further embodiment, the further or the second surface coating is a carbon coating.

In a further aspect a usage of an anode electrode is provided in an inventive electrochemical storage device.

The present disclosure will be explained in more detail below on the basis of schematic embodiments shown in the accompanying drawings:
- Fig. 1: shows an exemplary diagram illustrating a method for manufacturing a surface-coated silicon-carbon composite material according to an embodiment of the invention,
- Fig. 2: shows an exemplary electrochemical storage device with an electrode anode comprising a surface-coated silicon-carbon composite material according to an embodiment of the invention, and
- Fig. 3: shows an exemplary electrochemical storage device with an electrode anode comprising a surface-coated silicon-carbon composite material according to a further embodiment of the invention.

In the figures, identical reference numbers identify similar elements. The sizes and relative positions of elements in the figures are not necessarily drawn to scale and some of these elements are enlarged and positioned to improve figure legibility. Further, the particular shapes of the elements as drawn are not intended to convey any information regarding the actual shape of the particular elements, and have been solely selected for ease of recognition in the figures.

Unless the context requires otherwise, throughout the present specification and claims, the word "comprise" and variations thereof, such as, "comprises" and "comprising" are to be construed in an open, inclusive sense, that is, as "including, but not limited to". In the present description, any concentration range, percentage range, ratio range, or integer range is to be understood to include the value of any integer within the recited range and, when appropriate, fractions thereof (such as one tenth and one hundredth of an integer), unless otherwise indicated. As used herein, the terms "about" and "approximately" mean ± 20%, ± 10%, ± 5% or ± 1% of the indicated range, value, or structure, unless otherwise indicated. It should be understood that the terms "a" and "an" as used herein refer to "one or more" of the enumerated components. The use of the alternative (e.g., "or") should be understood to mean either one, both, or any combination thereof of the alternatives.

Reference throughout this specification to "one embodiment" or "an embodiment" means that a particular feature, structure or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

Unless defined otherwise, all technical and scientific terms used herein have the same meaning as is commonly understood by one of skill in the art to which this disclosure belongs. As used in the specification and claims, the singular form "a", "an" and "the" include plural references unless the context clearly dictates otherwise.

The term carbon portion of the silicon-carbon composite materials refers to a material or substance consisting of carbon or at least comprising carbon. In this regard, a carbon material may comprise high purity, amorphous and crystalline materials. A carbon material may be an activated carbon, a pyrolyzed dried polymer gel, a pyrolyzed polymer cryogel, a pyrolyzed polymer xerogel, a pyrolyzed polymer aerogel, an activated dried polymer gel, an activated polymer cryogel, an activated polymer xerogel, an activated polymer aerogel, or a combination thereof. In a further embodiment, a carbon is producible by a pyrolysis of coconut shells or other organic waste. In this regard, a polymer is a molecule comprising two or more repeating structural units. A porous carbon, also known as a porous carbon material, offers the advantage that it is usually easy to produce, usually has low impurities and a large pore volume. As a result, a porous carbon exhibits good electrical conductivity and high mechanical and chemical stability. In one embodiment, the carbon material has a high micropore volume ratio. Typically, the porous carbon has a pore space, also referred to as a pore volume, wherein the pore space is a group of voids (pores) in the carbon that is fillable with a gas or fluid. In this regard, properties of porous carbon, and manufacturing methods are described in the prior art, for example US Publication No. 2017 / 0015559, the full disclosure of which is hereby incorporated by reference in its entirety for all purposes.

The Si portion of the silicon-carbon composite materials may be pure silicon or a material composition comprising silicon. For example, the Si portion may be at least one alloy. An alloy may be a silicon-titanium alloy (Si-Ti), a silicon iron alloy (Si-Fe), a silicon nickel alloy (Si-Ni). In a further embodiment, the Si portion may consist of P-dopants, As-dopants or N-dopants. A P-dopant is usually a phosphorus dopant, an As-dopant is usually an arsenic dopant and an N-dopant is usually a nitrogen dopant.

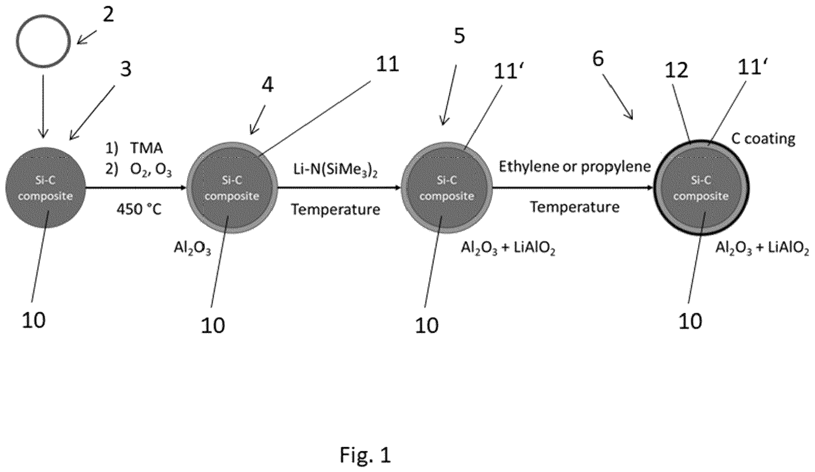

Fig. 1 shows an exemplary diagram illustrating a method 1 for manufacturing a surface-coated silicon-carbon composite material 10 according to an embodiment of the invention.

In a first method step 2 a porous carbon scaffold with micropores and mesopores is provided. The shown shape and size of the porous carbon scaffold and of the silicon-carbon composite material 10 is intended for illustration purpose of the method 1. The final shape and size of the utilized materials may vary depending on the requirements.

In a further method step 3, at least one compound comprising at least one of the Si, Fe, Al, Ni, and/or Ti is introduced into the micropores and mesopores of the porous carbon scaffold by chemical vapor infiltration to form a silicon-carbon composite.

In a further method step 4, at least one surface coating 11 is applied on a surface area of the silicon-carbon composite material 10 forming the surface-coated silicon-carbon composite material.

The at least one surface coating 11 comprises aluminum oxides or zirconium oxides and covers the surface area of the silicon-carbon composite material 10 at least partially. In the illustrated example, the at least one surface coating 11, 12 is covering the entire surface area of the silicon-carbon composite material 10 for explaining the principle.

In the shown embodiment, the surface area of the silicon-carbon composite material 10 is covered with trimethylaluminum TMA. During the exposure of the surface area to the trimethylaluminum it dissociatively chemisorbs on the surface area of the silicon-carbon composite material 10 and any remaining trimethylaluminum which is in gas-phase can be removed easily.

The dissociative chemisorption of trimethylaluminum TMA results in a processed compound surface which is covered with AlCH₃ molecules. This surface may be treated with moisture H₂O or oxygen O₂ or ozone O₃ in order to form the at least one layer of surface coating which is the first surface coating 11 in the described example.

This first surface coating 11 consist of Al₂O₃ molecules since the treatment leads to a chemical reaction of the CH₃ of the processed compound surface. Such coating may be provided with thermal atomic layer deposition which also requires a temperature increase, e.g. to 450°C.

In an optional step 5 the first surface coating layer 11 can be treated with Li-N(SiMe₃)₂ in combination with heating in order to modify the first surface coating layer 11 to a modified first surface coating layer 11' such that it contains Li in form of LiAlO₂ in addition to the Al₂O₃ molecules. Such molecules with lithium Li may increase the kinetics of Li ions through the modified first surface coating layer 11'.

In a further step 6, a second surface coating layer 12 can be applied on top of the first surface coating layer 11. In the illustrated example, the second surface coating layer 12 consists of carbon C. Before performing such the passivation via the second surface coating layer 12, the material may be heated in order to provide dissipation of remaining binders and/or solvents e.g. like ethylene or propylene.

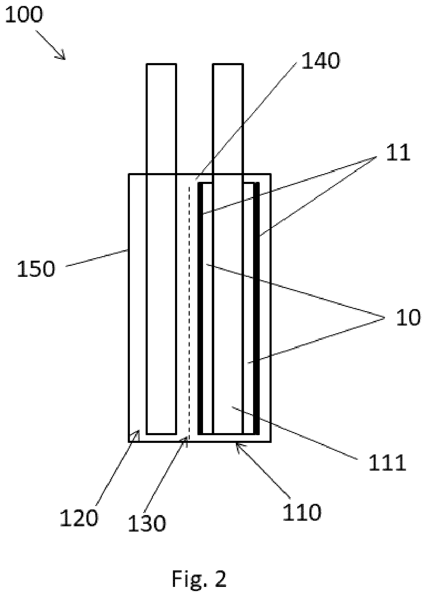

Fig. 2 shows a sectional view of an exemplary electrochemical storage device 100 with an electrode anode 110 comprising a surface-coated silicon-carbon composite material 10 manufactured with a method illustrated in Fig. 1.

The electrochemical storage device 100 is formed as a lithium-ion-battery cell. The electrochemical storage device 100 comprises at least one anode electrode 110, at least one cathode electrode 120 and a separator 130 disposed between the cathode electrode 120 and the anode electrode 110. The cathode electrode preferably comprises a transition metal oxide.

Furthermore an electrolyte 140 comprising lithium ions is provided in a cell housing 150 of the electrochemical storage device 100. The electrochemical storage device 100 can be formed as a lithium-ion-battery cell in a pouch form. Thus, the cell housing 150 may be formed as a aluminum bag. The anode electrode 110, the cathode electrode 120 and the separator 130 are arranged in the cell housing 150, too. It is noted that Fig. 2 shows a simplified sectional view. The anode electrode 110, the cathode electrode 120 and the separator 130 are usually formed as multiple layers which are winded or folded in order to optimize packaging and in order to increase the possible surface area of the electrolyte 140. In the shown example, only one layer of the components is visible for illustrational purpose.

The anode electrode 110 is coated on both sides with a surface-coated silicon-carbon composite material 10. The surface coating 11 of the surface-coated silicon-carbon composite material 10 is performed on surface areas of the silicon-carbon composite material 10 which are not in contact with a current collector 111 of the anode electrode 110.

By utilizing an anode electrode 110 with the surface-coated silicon-carbon material 10 the requirements on a dry room environment for manufacturing the electrochemical storage device 100 can be reduced. Especially during infill of the electrolyte 140 into the cell housing 150 the chemical interaction of the electrode anode with contaminants can be reduced or prevented due to the surface protection via the surface coating 11.

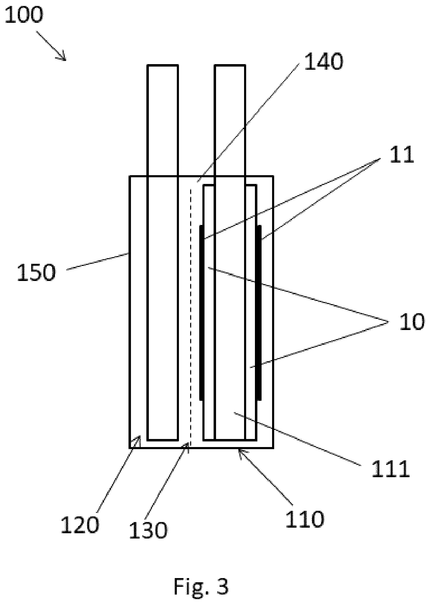

In Fig. 3 a further exemplary electrochemical storage device 100 is shown. The electrochemical storage device 100 comprises an electrode anode 110 with a surface-coated silicon-carbon composite material 10. In contrast to the embodiment shown in Fig. 2, the surface coating 11 of the silicon-carbon composite material 10 is applied partially on the surface are of the silicon-carbon composite material 10 such that parts of the surface area of the silicon-carbon composite material 10 remain without the surface coating 11.

## Claims

1. A silicon-carbon composite material (10, 11) comprising:
- a porous carbon scaffold comprising micropores and mesopores and a total pore volume of more than 0.5 cm³/g;
- a silicon content between 30% and 70%, including 30% and 70%; and
- a surface area with at least partially applied first surface coating (11) comprising at least one of the elements of Li, B, Al, Si, P, Ti, Zr, Nb and/or W.

2. The silicon-carbon composite material of claim 1, wherein the at least partially applied first surface coating (11) is formed as a layer, wherein the layer of the surface coating has a thickness of 0.1 nm to 1 µm.

3. The silicon-carbon composite material according to claim 1 or 2, wherein the first surface coating (11) comprises a metal oxide from at least one or more of the elements B, Al, Si, Zr, Nb, Wand Li.

4. The silicon-carbon composite material according to anyone of the claims 1 to 3, wherein the first surface coating (11) is covering at least 50% of the surface area of the silicon-carbon composite material (10).

5. The silicon-carbon composite material according to anyone of claims 1 to 4, wherein the surface area of the silicon-carbon composite material (10) is at least partially covered by the first surface coating (11) and by a second surface coating (12), wherein the second surface coating (12) is at least partially applied on top of the first surface coating (11) and/or besides the first surface coating (11).

6. The silicon-carbon composite material according to claim 5, wherein the second surface coating (12) is formed as a carbon coating.

7. The silicon-carbon composite material according to anyone of claims 1 to 6, wherein the silicon-carbon composite material (10) comprises a surface area in the range of 2m²/g to 30 m²/g, especially in the range of 4 m²/g to 10 m²/g.

8. The silicon-carbon composite material according to claim 1 to claim 7, wherein the silicon-carbon composite material (10) comprises lithium.

9. A method (1) for manufacturing a surface-coated silicon-carbon composite material (10) according to anyone of the claims 1 to 8, wherein
- a porous carbon scaffold with micropores and mesopores is provided,
- a compound comprising at least one of the Si, Fe, Al, Ni, W and/or Ti is introduced into the micropores and mesopores of the porous carbon scaffold by chemical vapor infiltration to form a silicon-carbon composite (10),
- at least one surface coating (11, 12) is applied on a surface area of the silicon-carbon composite material (10) forming the surface-coated silicon-carbon composite material (10), wherein the at least one surface coating (11) comprises aluminum oxides or zirconium oxides and covers the surface area of the silicon-carbon composite material (10) at least partially.

10. The method according to claim 9, wherein the at least one surface coating (11, 12) of the surface area of the silicon-carbon composite material is applied via a gas phase deposition method.

11. The method according to claim 9 or 10, wherein the at least one surface coating is treated with a metal alkoxide or metal amide or alkyl metal compound to form a processed compound surface, wherein the processed compound surface is treated with moisture or oxygen or ozone in order to form the at least one layer of a first surface coating (11).

12. The method according to anyone of claims 9 to 11, wherein the first surface coating (11) of the surface area of the silicon-carbon composite material (10) and/or the silicon-carbon composite material (10) is formed with lithium.

13. The method according to anyone of the claims 9 to 12, wherein the first surface coating (11) of the surface area of the silicon-carbon composite material (10) comprises a metal oxide from at least one of the elements B, Al, Si, Zr, Nb, W and/or Li.

14. The method according to anyone of claims 9 to 13, wherein during the formation of the first surface coating (11) of the surface coating area of the silicon-carbon composite material a temperature in a range of 15 °C to 550 °C is applied to the silicon-carbon composite material (10) and the first surface coating (11).

15. The method according to claim 11, wherein the treatment of the silicon-carbon composite material (11) with a metal alkoxide or metal amide or alkyl metal compound to form a processed compound surface and the treating of the treatment of the processed compound surface with moisture or oxygen or ozone are repeated at least once.

16. The method according to anyone of claims 11 or 15, wherein during the treatment of the processed compound with moisture or oxygen or ozone a temperature in a range from 15 °C to 550 °C is applied.

17. An anode electrode (110), comprising a surface-coated silicon-carbon material (10) with at least one surface coating (11, 12) according to anyone of the claims 1 to 8.

18. Method for manufacturing at least one anode electrode (110) according to claim 17, wherein
- a silicon-carbon composite mixture with at least one carbon is mixed,
- the silicon-carbon composite mixture is combined with at least one aqueous binder solution and/or with at least one non-aqueous binder solution in order to form an electrode paste,
- the electrode paste is applied at least partially on at least one surface of a conductor foil (111),
- the conductor foil (111) with the applied electrode paste is dried at a temperature of 100 °C to 140 °C forming the at least one anode electrode (110).

19. Method for manufacturing at least one anode electrode (110) according to claim 17, wherein
- a dry or semi-dry silicon-carbon composite mixture with at least one carbon is mixed; wherein the mixture is combined with a binder powder and comprises graphite particles and/or carbon black particles;
- the silicon-carbon composite mixture combined with the binder powder is applied via calendering at least partially on at least one surface of a current collector formed as a conductor foil (111);
- the conductor foil (111) with the applied mixture is dried at a temperature of 100 °C to 140 °C forming the at least one anode electrode (110)

20. An electrochemical storage device (100), especially formed as a lithium-ion-battery, comprising:
- at least one anode electrode (110), according to claim 17;
- at least one cathode electrode (120), wherein the cathode electrode (120) comprises a transition metal oxide;
- a separator (130) disposed between the cathode electrode (120) and the anode electrode (110); and
- an electrolyte (140) comprising lithium ions.
